# EUROPEAN PATENT SPECIFICATION

(11) **EP 3 341 193 B1**
(45) Date of publication and mention of the grant of the patent: **14.10.2020**
(21) Application number: 17754698.3
(22) Date of filing: 16.08.2017
(51) Int. Cl.: B32B 5/02, B32B 27/12, B32B 7/12, B32B 5/22, B32B 5/26, B32B 19/04, B32B 19/06, B32B 25/10, B32B 7/02, B32B 7/04, B32B 7/10, B32B 3/02, B32B 3/26, B32B 3/30, E04D 11/02

(54) **MINERAL WOOL INSULATION**
MINERALWOLLEISOLIERUNG
ISOLATION EN LAINE MINÉRALE

(30) Priority: 17.08.2016 GB 201614101
(43) Date of publication of application: 04.07.2018
(73) Proprietor: Knauf Insulation SPRL, 4600 Visé (BE)
(72) Inventor: BONCA, Metod, 1435 Mont-Saint-Guibert (BE); MENTE, Markus, 1435 Mont-Saint-Guibert (BE)
(74) Representative: ARC-IP
(86) International application number: PCT/EP2017/070725
(87) International publication number: WO 2018/033558

(56) References cited:
- WO-A1-98/31895
- WO-A1-2013/034376
- GB-A- 2 312 695
- US-A1- 2005 166 539
- US-A1- 2009 208 714

## Description

### Mineral wool insulation

This invention relates to a mineral wool insulation panel particularly for flat or inclined roofs.

A common type of insulated roof system comprises, in sequence, a support structure, a layer of mineral wool insulation and an overlying weatherproof membrane which seals the roofing system against ingress of water. This is sometime referred to as a "warm roof" as the insulation is arranged above the structural deck which is thus kept warm. The weatherproof membrane may be retained by mechanical fixing, by adhesion or by overlying ballast. One problem associated with design of mineral wool insulation, notably for such systems, is to provide insulation panels which are easily incorporated in a number of different configurations of roofing system.

WO 98/31895 describes a roofing system comprising, in sequence, a mineral fibre insulating panel, a woven glass fabric having openings preferably in the range 1.0 to 1.5 mm and an overlying moisture/water impermeable sheet joined to the mineral fibre insulating panel by adhesive which penetrates through the woven fabric and into the mineral fibre panel. This is said to provide improved peel strength. WO 2013/034376A1 attempts to overcome disadvantages of WO 98/31895 and teaches a system comprising, in sequence, a mineral fibre insulating panel, a glass fibre fleece impregnated with a filler and an overlying moisture/water impermeable sheet. WO 98/31895 teaches that its glass fibre fleece must prevent penetration of the adhesive which is used to secure the moisture/water impermeable sheet so that this adhesive does not penetrate or contact the underlying mineral wool panel. Additional disclosures are found in: GB2312695A which discloses a composite roof system; US 2005/0166539 A1 which discloses a building element and US 2009/0208714 A1 which discloses a pre-coated non-woven mat-faced gypsum panel.

One aim of the present invention is to provide a mineral wool panel for a roof system which provides an advantageous combination of ease of manufacturing, suitability for use with a plurality of building systems, particularly roof systems, and peel strength for an overlying weatherproof membrane when adhered thereto.

In accordance with one of its aspects, the present invention provides a roof system as defined in claim 1. Additional aspects of the invention are defined in independent claims. The dependent claims define preferred and/or alternative embodiments.

In accordance with a further aspect, the present invention provides a roof system comprising, preferably in sequence from the inside to the outside of a building structure: a support structure; a mineral wool insulation panel comprising mineral fibres and a non-woven veil secured to its upper surface by a binder; and an overlying weatherproof membrane secured to the mineral wool insulation panel by an adhesive, in which the adhesive penetrates through securing portions of the non-woven veil to provide an adhesive connection between the mineral fibres of the insulating panel and the weatherproof membrane.

The support structure may comprise a timber deck, a metal deck or a concrete deck. A vapour control layer, for example a polymer sheet, polyethylene sheet, reinforced polyethylene sheet, bitumen layer or bitumen bonded felt, may be provided between the support structure and the mineral wool insulation panel.

The roof system may be a warm roof, for example, a warm roof with a built-up felt or asphalt roof covering, a warm roof with a single ply membrane or an inverted/protected membrane/green roof.

The mineral wool insulation panel preferably comprises stone wool fibres. It may have:
- a density which is ≥80 kg/m³ or ≥ 90 kg/m³ and/or which is ≤ 220 kg/m³ or ≤ 200 kg/m³; and/or
- a thermal conductivity which is ≤ 40 mW/m.K or ≤ 39 mW/m.K and/or ≥ 30 mW/m.K.
The mineral wool insulation panel may comprise a dual density mineral panel, that is to say a mineral wool panel comprising a high density surface layer of mineral wool fibres (notably having i) a thickness which is ≥ 5mm and/or ≤ 40 mm and/or ii) a density which is ≥ 130 kg/m³ and/or ≤ 250 Kg/m³) and a lower density underlying layer of mineral wool fibres (notably having i) a thickness which is ≥ 45mm and/or ≤ 400 mm and/or ii) a density which is ≥ 100 kg/m³ and/or ≤ 185 kg/m³). The roof system may comprise a single layer of mineral wool insulation panels or a plurality of layers comprising a stack of individual mineral wool panels. The mineral wool insulation panel may comprise glass wool fibres, notably crimped glass wool fibres.

The mineral wool insulation panel may comprise a mineral wool binder which serves to hold its individual fibres together, notably an organic, thermoset binder. The mineral wool binder may make up ≥ 2 wt%, ≥ 2.5 wt% or ≥ 3 wt% and/or ≤ 7 wt% or ≤ 6 wt% or ≤ 5 wt% of the mineral wool insulation panel. The binder content may be determined by LOI (loss on ignition). Preferably, the mineral wool binder and the mineral wool insulation panel are formaldehyde free. In particular, the mineral wool binder is preferably not a phenol formaldehyde binder. The mineral wool insulation panel (comprising the mineral wool binder) preferably comprises less than 5 ppm or less than detectable limits of free formaldehyde and/or consist of materials which together comprise less than these amounts of free formaldehyde and/or releases levels of formaldehyde in standardised tests adapted to simulate ordinary use which allows it to be classified as having no or undetectable levels of formaldehyde release. Preferably, such products release less than 10µg/m³, more preferably less than 5 µg/m³ of formaldehyde during the period of 24-48 hours from the start of testing in accordance with ISO 16000. The mineral wool binder may be a sugar based binder, that is to say a binder which is the reaction product(s) of a binder solution whose solid content comprises at least 50 wt% sugar(s). The mineral wool binder may be the reaction product(s) of a binder solution whose solid content comprises at least 70 wt% reducing sugar(s), preferably in combination with a source of nitrogen to form a Maillard reaction product, notably in combination with preferably at least 10 wt% of i) amine(s) and/or ii) carboxylic acid(s).

The fibres of the mineral wool insulation panel may be orientated substantially perpendicular to the panel's major surfaces; they may be crimped. The mineral wool insulation panel may have a crimp factor which is ≥ 1.1, ≥ 1.2, ≥ 1.3 ≥ 1.5 or ≥ 2 and/or ≤ 4 or ≤ 3.5. The crimp factor provides an indication of the degree of crimping and thus of fibre re-orientation; it may be assessed by comparing i) the manufacturing line speed of the mineral wool prior to crimping, notably the line speed of the secondary blanket in the case of stone wool insulation with ii) the manufacturing line speed of the mineral wool panel after crimping, notably the line speed of the mineral wool blanket through the curing oven. A crimp factor of 3 indicates a line speed after curing of 1/3 of the line speed prior to crimping. The mineral wool insulation panel preferably has a compressive strength which is ≥ 30 kPa, ≥ 40 kPa or ≥ 55 kPa, notably ≥ 58 kPa. Compression strength and other properties of the mineral wool insulation panel should be measured in accordance with EN13162 and the specific standards referred to therein.

The mineral wool insulation panel preferably has a fire classification of Euroclass A1 or A2 as determined under EN 13501-1.

The non-woven veil is preferably secured to the upper surface of the mineral wool insulation panel by the same binder as that present in the mineral wool insulation panel. In a preferred manufacturing method, the non-woven veil is applied to the upper surface of a mineral wool batt as the batt moves along a manufacturing line, preferably without applying additional binder, and binder present in the batt secures the veil and the batt together during passage through a curing oven to cure the binder. In such a method, the securing portions of the veil (which will subsequently allow passage of adhesive) facilitate curing of the batt by facilitating passage of heated air though the veil covered batt. Alternatively, the non-woven veil may not be passed through a curing oven; it may be secured to the upper surface of the mineral wool insulation panel after the mineral wool has passed through a curing oven. The binder by which the non-woven veil is secured to the upper surface of the mineral wool insulation panel may be a hot melt binder, a thermoset binder, an organic binder, an inorganic binder, a poly(vinyl acetate) binder, a polyurethane binder or a water glass binder. It may be a binder as described above in relation to mineral wool binders, notably a binder that is formaldehyde free and which is not a phenol formaldehyde binder. The binder by which the non-woven veil is secured to the upper surface of the mineral wool insulation panel may be present in an amount which is ≥ 5 g/m², ≥ 10 g/m² or ≥ 15 g/m² and/or ≤ 50 g/m², ≤ 40 g/m² or ≤ 30 g/m².

Whilst not wishing to be bound by theory, it is believed that the use of a veil which is a non-woven, particularly a non-woven veil which comprises a filler, facilitates provision of a plurality of passages through the veil having a spread distribution of opening sizes; the larger openings permit passage of air through the veil during manufacture and the passage of adhesive through the veil to secure the membrane whilst the smaller openings block passage of the adhesive whilst still contributing during manufacture to passage of air. This allows an optimisation which is not possible with the woven veils of WO 98/31895 in respect of which all openings will be substantially the same size. The securing portions may make up a portion of the surface area of the non-woven veil which is ≥ 5%, ≥ 10%, ≥ 15%, ≥ 20%, ≥ 25%, ≥ 30%, ≥ 35%, ≥ 40% or ≥ 45% and/or ≤ 95%, ≤ 90%, ≤ 85%, ≤ 80%, ≤ 75% or ≤ 70%.

The fibres of the non-woven veil are held together by a veil binder; this may be a thermoset binder. The veil binder may comprise a PVC binder or a PVC based binder. The veil binder may be a binder as described above in relation to mineral wool binders; it may comprise ≥ 5 wt% or ≥ 8 wt% and/or ≤ 30 wt% or ≤ 28 wt% of the non-woven veil. The veil may comprise a flame retardant, for example comprising a phosphate, borate, hydroxide or aluminium hydroxide. The non-woven veil preferably comprises a filler, notably an inorganic filler, for example comprising calcium oxide, calcium hydroxide, aluminium hydroxide, clay, talc, magnesium silicate, hydrated magnesium silicate or mixtures thereof. The filler, or the combination of filler and flame retardant, may comprise ≥ 10 wt%, or ≥ 15 wt% or ≥ 20 wt% or ≥ 25 wt% and/or ≤ 80 wt%, or ≤ 70 wt%, or ≤ 60 wt% of the non-woven veil. The non-woven veil may be formed by applying the filler to a non-woven veil having a weight which is ≥ 30 g/m² or ≥ 40 g/m² or ≥ 45 g/m² and/or ≤ 100g/m², or ≤ 80g/m², or ≤ 70g/m². The veil, including the filler, may have a weight which is ≥ 100 g/m² or ≥ 150 g/m² or ≥ 200 g/m² or ≥ 250 g/m² or ≥ 300 g/m² and/or ≤ 500 g/m², or ≤ 450 g/m² or ≤ 400 g/m². For example, the veil (including any filler and coating) may have a weight which is ≥ 200 g/m² or ≥ 250 g/m² and/or ≤ 350 g/m² or ≤ 400 g/m². The non-woven veil may comprise a water repellent or hydrophobic agent, for example a fluorocarbon, which may comprise ≥ 0.5 wt% or ≥ 1 wt% and/or ≤ 2 wt% or ≤ 1.5 wt% of the non-woven veil; this may form part of the veil binder. Where the filler comprises talc, this may provide hydrophobic characteristics to the veil. Where the filler comprises Al₂O₃, this may provide fire resistant characteristics to the veil. The veil may be coated on only one of its major surfaces or it may be coated on each of its two major surfaces; the coating may comprise a filler and/or a flame retardant and/or a water repellent or hydrophobic agent, notably as described above. The fibres of the non-woven veil may be selected such that at least 80% of the fibres by weight have a diameter which is: AA 0.8-1-2µm; A 1.2-2.5µm; B 2.5-3.8 µm; C3.8-5.0 µm; D 5.0-6.4 µm; E6.4-7.6 µm; F 7.6-9.0 µm; G 9.0-10.2 µm; H 10.2-11.4 µm or J 11.4-12.7 µm. The veil may have a width which is ≥ 1.5 m or ≥ 1.8 m and/or ≤ 2.6 m or ≤ 2.4 m. The veil may be supplied in the form of a roll; this facilitates application to the mineral wool insulation panel. Such a roll may have: an external diameter which is ≥ 0.5 m or ≥ 0.8m and/or ≤ 1.6 m or ≤ 1.4 m; it may comprise a continuous length of veil which is ≥ 800 m or ≥ 1000 and/or ≤ 2000 m or ≤ 1800 m.

The weatherproof membrane may be a single ply membrane. It may be selected from a bitumen membrane, a fully bonded built-up bitumen membrane, mastic asphalt, a polymer membrane, a PVC membrane; an EPDM (ethylene propylene diene terpolymer) membrane; a membrane applied in liquid form. The adhesive may be a "hot melt" adhesive, for example a bitumen or bitumen based adhesive. The hot melt adhesive may be applied in liquid form, for example poured on to or spread over the mineral wool insulation panel prior to application of the membrane. Alternatively, the adhesive may be contained within the membrane and released by heating the membrane, for example by torching a bituminous membrane. The adhesive may be a cold adhesive; it may be a polymer adhesive. The adhesive may be a polyurethane adhesive, a polyacrylic adhesive, a rubber adhesive or a rubber contact adhesive. The adhesive may be applied at a viscosity in the range 750 to 6000 cps; the quantity of adhesive may be ≥ 50 g/m², or ≥ 100 g/m² or ≥ 150 g/m² and/or ≤ 800g/m², or ≤ 600g/m², or ≤ 500g/m², or ≤ 350 g/m².

The side of the mineral wool insulation panel to which the non-woven veil is secured may have a point load resistance (measured in accordance with EN12430) which is ≥ 650 N, ≥ 750 N, ≥ 800 N or ≥ 900 N.

In addition to adhesion between the weatherproof membrane and the mineral wool insulation panel, the roofing system may comprise anchors, notably mechanical fixations, to secure the weatherproof membrane, for example to secure the weatherproof membrane to the mineral wool insulation panel and/or to the support structure. In preferred embodiments, no such anchors are used, the adhesion between the weatherproof membrane and the mineral wool insulation panel providing sufficient peel strength. In other embodiments, between one and four such anchors are used per mineral wool insulation panel; common know comparable roof systems require a greater number of anchors.

Non-woven veils used in accordance with the present invention, particularly in their preferred forms, provide a valuable combination of advantages, notably:
- on-site protection of the mineral panel prior to completion of the building structure, the exposed non-woven veil reducing water ingress into the mineral wool insulating panel and/or providing UV protection;
- mechanical properties, notably a high resistance of the mineral wool insulating panels to point loads before and/or after placement of an overlying weatherproof membrane;
- resistance to torching, for example when applying a bituminous weatherproof membrane;
- a pre-determined amount of adhesive penetration through the non-woven veil and in to the mineral wool providing high peel strength for an adhered weatherproof membrane without excessive use of adhesive for both hot and cold adhesives;
- particularly good adhesion and/or peel strength for cold gluing, notably from the combination of a substantially dust free surface and a pre-determined amount of adhesive penetration.

An embodiment of the invention will now be described, by way of example only, with reference to the accompanying drawings of which:
Fig 1 is a schematic side view of a warm roof system;
Fig 2 is a schematic, partially cut away perspective view of an insulation panel;
Fig 3 is a photograph of a disassembled insulating panel;
Fig 4 is a photograph of the underside of the veil of the disassembled insulating panel; and
Fig 5 is a cross-sectional photograph of the veil of the disassembled insulating panel.

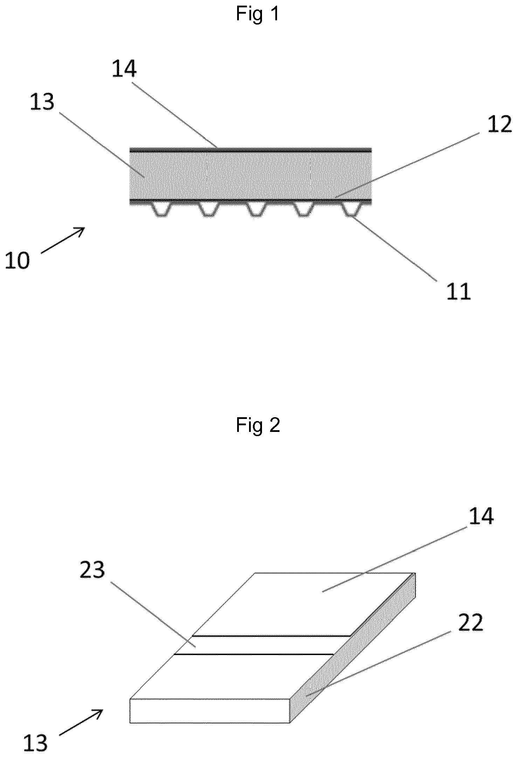

The warm deck, single ply roof system 10 of Fig 1 comprises (in sequence from the interior to the exterior of a building) a support structure 11 provided by a metal deck, an optional vapour control layer 12, a mineral wool insulation panel 13, and a overlying weatherproof membrane 14, in this case a single ply membrane, secured to the mineral wool panel 13 by an adhesive (not shown).

As shown in Fig 2, the insulation panel 13 comprises a core 22 of mineral wool fibres provided on its upper surface with a non-woven veil 23. The non-woven veil 23 is manufactured by applying an inorganic filler comprising talc to a glass veil having a weight of about 50 g/m² and comprising glass fibres (diameter AA: 0.8 to 1.2µm) retained together by a veil binder. The combination of the veil weight, fibre diameter and amount of filler is selected to provide the non-woven veil with securing portions, that is to say, portions of the non-woven veil through which there is penetration of the adhesive which secures the overlying weatherproof membrane 14 to the mineral wool panel 13.

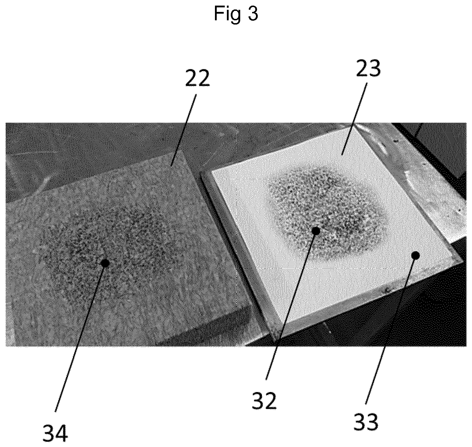

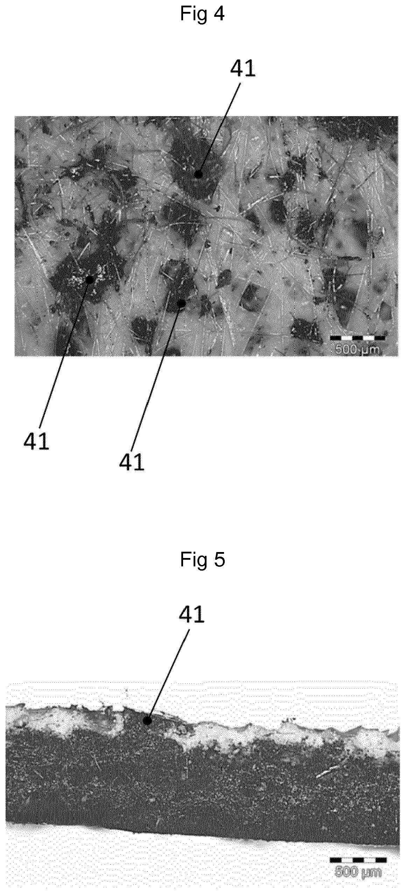

To evaluate penetration of the adhesive through the non-woven veil a portion of bituminous weatherproof membrane 14 was heated up on a steel plate, a layer of non-woven veil 23 was laid on top of the heated bituminous weatherproof membrane 14, a portion of an un-faced mineral wool panel 22 was laid over the non-woven veil 23 and the sample was left to cool. Once cool, the bitumen membrane 14 adhered strongly to the mineral wool panel; this demonstrates that the bitumen adhesive had penetrated through securing portions of the non-woven veil to provide an adhesive connection. The sample was subsequently pulled apart and Figs 3, 4 and 5 show photographs of this disassembled sample. Fig 3 shows the underside of the non-woven veil 23 having a central portion 32 corresponding to the portion at which the bituminous membrane was present and an edge portion 33 at which the bituminous membrane was not present. At the central portion 32, the bitumen adhesive penetrated through part but not all of the non-woven veil. Corresponding portions of bitumen adhesive were also present at part but not all of the central portion 34 of the mineral wool slab 22. Fig 4 shows a microscope photograph of the underside of the non-woven veil i.e. the portion of the non-woven veil that was in contact with the mineral wool slab 22. Penetration of the bitumen adhesive can be seen at securing portions 41 of the non-woven veil, these securing portions are present at part but not all of the surface area of the veil. Fig 5 shows a magnified photograph through a cross section of the non-woven veil. Again penetration of the bitumen adhesive is seen at securing portions 41 of the veil but not at other portions.

The dark colour of the bitumen adhesive of the warm roof bituminous weatherproof membrane facilitated visualisation of the securing portions of the non-woven veil. The effect of penetration of the membrane adhesive occurs in the same way with other warm roof membrane adhesives and adhering techniques. Determination of the area of the securing portions as a % of the surface area of the non-woven veil may be carried out by image processing, for example image processing of a photograph of the type illustrated in Fig 3 or Fig 5.

## Claims

1. A roof system comprising, in sequence: a support structure; a mineral wool insulation panel comprising mineral fibres and a non-woven veil secured to its upper surface by a binder; and an overlying weatherproof membrane secured to the mineral wool insulation panel by an adhesive, **characterised in that** the adhesive penetrates through securing portions of the non-woven veil to provide an adhesive connection between the mineral fibres of the insulating panel and the weatherproof membrane, and in which the securing portions make up between 5% and 95% of the surface area of the non-woven veil, notably in which the securing portions make up between 15% and 85% of the surface area of the non-woven veil.

2. A roofing system in accordance with claim 1, in which the securing portions make up between 20% and 80% of the surface area of the non-woven veil.

3. A roofing system in accordance with claim 1 or claim 2, in which the non-woven veil comprises a filler, notably selected from calcium oxide, calcium hydroxide, aluminium hydroxide, clay, talc, magnesium silicate, hydrated magnesium silicate and mixtures thereof.

4. A roofing system in accordance with claim 3, in which weight of the veil, including the filler, is ≥ 100 g/m² and ≤ 500 g/m², notably ≥ 250 g/m² and ≤ 400 g/m².

5. A roofing system in accordance with any preceding claim, in which the fibres of the non-woven veil consist of glass fibres.

6. A roofing system in accordance with any of claims 1 to 4, in which the fibres of the non-woven veil comprises glass fibres and polymer fibres, notable PE fibres, notably in which the collection of fibres comprises between 70 wt% and 90 wt% glass fibres and between 30 wt% and 10 wt% polymer fibres.

7. A roofing system in accordance with any preceding claim, in which the fibres of the non-woven veil consist of a collection of fibres selected from i) a collection of fibres in respect of which at least 80% of the fibres have a diameter in the range 0.8µm to 1.2µm and ii) a collection of fibres in respect of which the at least 80% of the fibres have a diameter in the range 1.2µm to 2.5µm.

8. A roofing system in accordance with any preceding claim, in which the mineral wool insulation panel comprises a dual density insulation panel comprising i) a high density surface layer of mineral wool fibres to which the non-woven veil is secured, notably having a thickness in the range 5mm to 40 mm and a density in the range 130 kg/m³ to ≤ 250 Kg/m³, and ii) a lower density underlying layer of mineral wool fibres, notably having a thickness in the range 45mm to 400 mm and a density in the range 100 kg/m³ to 185 kg/m³.

9. A mineral wool insulation panel for use in a roofing system in accordance with any of claims 1 to 8, the mineral wool insulation panel comprising mineral fibres and a non-woven veil secured to its upper surface by a binder **characterised in that** the non-woven veil comprises securing portions which make up between 5% and 90%, preferably between 15% and 85%, more preferably between 20% and 80%, of the surface area of the non-woven veil, the securing portion being configured to allow penetration through the non-woven veil of an adhesive used to secure a weatherproof membrane.

10. Use of a non-woven veil comprises securing portions which make up between 5% and 90%, preferably between 15% and 85%, more preferably between 20% and 80% of the surface area of the non-woven veil as an upper surface of a mineral wool insulating panel to allow penetration through the securing portions of the non-woven veil of an adhesive used to secure a weatherproof membrane.

## Patentansprüche

1. Dachsystem, umfassend in Reihenfolge: eine Trägertruktur; eine Mineralwolle-Dämmplatte, umfassend Mineralfasern und ein Vliestuch, das an ihrer oberen Fläche mittels eines Bindemittels befestigt ist; und eine darüberliegende witterungsbeständige Membran, die mittels eines Haftmittels an der Mineralwolle-Dämmplatte befestigt ist, **dadurch gekennzeichnet, dass** das Haftmittel Befestigungsabschnitte des Vliestuches durchdringt, um eine Haftverbindung zwischen den Mineralfasern der Dämmplatte und der witterungsbeständigen Membran bereitzustellen, und in welchem die Befestigungsabschnitte zwischen 5% und 95% der Fläche des Vliestuches ausmachen, insbesondere in welchem die Befestigungsabschnitte zwischen 15% und 85% der Fläche des Vliestuches ausmachen.

2. Dachsystem nach Anspruch 1, in welchem die Befestigungsabschnitte zwischen 20% und 80% der Fläche des Vliestuches ausmachen.

3. Dachsystem nach Anspruch 1 oder Anspruch 2, in welchem das Vliestuch einen Füllstoff umfasst, insbesondere ausgewählt aus Calciumoxid, Calciumhydroxid, Aluminiumhydroxid, Ton, Talk, Magnesiumsilikat, hydratisiertem Magnesiumsilikat und Gemischen davon.

4. Dachsystem nach Anspruch 3, in welchem das Gewicht des Tuches, einschließlich des Füllstoffes, ≥ 100 g/m² und ≤ 500 g/m², insbesondere ≥ 250 g/m² und ≤ 400 g/m² beträgt.

5. Dachsystem nach einem vorhergehenden Anspruch, in welchem die Fasern des Vliestuches aus Glasfasern bestehen.

6. Dachsystem nach einem der Ansprüche 1 bis 4, in welchem die Fasern des Vliestuches Glasfasern und Polymerfasern, insbesondere PE Fasern, umfassen, insbesondere in welchem die Sammlung an Fasern zwischen 70 Gew.-% und 90 Gew.-% Glasfasern und zwischen 30 Gew.-% und 10 Gew.-% Polymerfasern umfasst.

7. Dachsystem nach einem vorhergehenden Anspruch, in welchem die Fasern des Vliestuches aus einer Sammlung an Fasern bestehen, ausgewählt aus i) einer Sammlung an Fasern im Bezug auf welcher mindestens 80% der Fasern einen Durchmesser in dem Bereich 0,8 µm bis 1,2 µm aufweisen und ii) einer Sammlung an Fasern im Bezug auf welcher mindestens 80% der Fasern einen Durchmesser in dem Bereich 1,2 µm bis 2,5 µm aufweisen.

8. Dachsystem nach einem vorhergehenden Anspruch, in welchem die Mineralwolle-Dämmplatte eine Dämmplatte mit zwei Dichten umfasst, umfassend i) eine Oberflächenschicht mit hoher Dichte von Mineralwolle-Fasern, an welcher das Vliestuch befestigt ist, insbesondere mit einer Dicke in dem Bereich 5mm bis 40 mm und einer Dichte in dem Bereich 130 kg/m³ bis ≤ 250 kg/m³, und ii) eine darunter liegende Schicht mit geringerer Dichte von Mineralwolle-Fasern, insbesondere mit einer Dicke in dem Bereich 45mm bis 400 mm und einer Dichte in dem Bereich 100 kg/m³ bis 185 kg/m³.

9. Mineralwolle-Dämmplatte zur Verwendung in einem Dachsystem nach einem der Ansprüche 1 bis 8, wobei die Mineralwolle-Dämmplatte Mineralfasern und ein Vliestuch, das an ihrer oberen Fläche mittels eines Bindemittels befestigt ist, umfasst, **dadurch gekennzeichnet, dass** das Vliestuch Befestigungsabschnitte umfasst, welche zwischen 5% und 90%, bevorzugt zwischen 15% und 85%, mehr bevorzugt zwischen 20% und 80% der Fläche des Vliestuches ausmachen, wobei die Befestigungsabschnitte konfiguriert sind, um das Durchdringen eines Haftmittels durch das Vliestuch zu ermöglichen, welches zur Befestigung einer witterungsbeständigen Membran verwendet wird.

10. Verwendung eines Vliestuches, das Befestigungsabschnitte umfasst, welche zwischen 5% und 90%, bevorzugt zwischen 15% und 85%, mehr bevorzugt zwischen 20% und 80% der Fläche des Vliestuches ausmachen, als eine obere Fläche einer Mineralwolle-Dämmplatte, um das Durchdringen eines Haftmittels durch die Befestigungsabschnitte des Vliestuches zu ermöglichen, welches zur Befestigung einer witterungsbeständigen Membran verwendet wird.

## Revendications

1. Système de toiture comprenant, successivement : une structure de support ; un panneau d'isolation en laine minérale comprenant des fibres minérales et un voile non tissé fixé sur sa surface supérieure par un liant ; et une membrane de couverture étanche, fixée au panneau d'isolation en laine minérale par un adhésif, **caractérisé en ce que** l'adhésif pénètre au travers de parties de fixation du voile non tissé pour créer une connexion adhésive entre les fibres minérales du panneau isolant et la membrane étanche, et dans lequel les parties de fixation composent de 5% à 95% de l'aire de surface du voile non tissé, notamment dans lequel les parties de fixation composent 15% à 85% de l'aire de surface du voile non tissé.

2. Système de toiture selon la revendication 1, dans lequel les parties de fixation composent de 20% à 80% de l'aire de surface du voile non tissé.

3. Système de toiture selon la revendication 1 ou 2, dans lequel le voile non tissé comprend une charge, choisie notamment parmi de l'oxyde de calcium, de l'hydroxyde de calcium, de l'hydroxyde d'aluminium, de l'argile, du talc, du silicate de magnésium, du silicate de magnésium hydraté et leurs mélanges.

4. Système de toiture selon la revendication 3, dans lequel le poids du voile, charge comprise, est ≥ 100 g/m² et ≤ 500 g/m², notamment ≥ 250 g/m² et ≤ 400 g/m².

5. Système de toiture selon l'une quelconque des revendications précédentes, dans lequel les fibres du voile non tissé consistent en des fibres de verre.

6. Système de toiture selon l'une quelconque des revendications 1 à 4, dans lequel les fibres du voile non tissé comprennent des fibres de verre et des fibres polymères, notamment des fibres PE, notamment dans lequel l'ensemble des fibres contient 70% en poids à 90% en poids de fibres de verre et 30% en poids à 10% en poids de fibres polymères.

7. Système de toiture selon l'une quelconque des revendications précédentes, dans lequel les fibres du voile non tissé consistent en un ensemble de fibres choisies parmi i) un ensemble de fibres dont au moins 80% ont un diamètre situé dans l'intervalle allant de 0,8 µm à 1,2 µm et ii) un ensemble de fibres dont au moins 80% ont un diamètre situé dans l'intervalle allant de 1,2 µm à 2,5 µm.

8. Système de toiture selon l'une quelconque des revendications précédentes, dans lequel le panneau d'isolation en laine minérale comprend un panneau d'isolation à double densité, comprenant i) une couche de surface de haute densité de fibres de laine minérale, à laquelle le voile non tissé est fixé, ayant notamment une épaisseur située dans l'intervalle allant de 5 mm à 40 mm et une densité située dans l'intervalle allant de 130 kg/m³ à ≤ 250 kg/m³, et ii) une couche inférieure de plus faible densité de fibres de laine minérale, ayant notamment une épaisseur située dans l'intervalle allant de 45 mm à 400 mm et une densité située dans l'intervalle allant de 100 kg/m³ à ≤ 185 kg/m³.

9. Panneau d'isolation en laine minérale à utiliser dans un système de toiture selon l'une quelconque des revendications 1 à 8, le panneau d'isolation en laine minérale comprenant des fibres minérales et un voile non tissé fixé sur sa surface supérieure par un liant, **caractérisé en ce que** le voile non tissé comprend des parties de fixation, qui composent de 5% à 90%, de préférence de 15% à 85%, de manière plus préférée de 20% à 80%, de l'aire de surface du voile non tissé, les parties de fixation étant configurées pour permettre la pénétration au travers du voile non tissé d'un adhésif utilisé pour fixer une membrane étanche.

10. Utilisation d'un voile non tissé comprenant des parties de fixation, qui composent de 5% à 90%, de préférence de 15% à 85%, de manière plus préférée de 20% à 80%, de l'aire de surface du voile non tissé, comme surface supérieure d'un panneau isolant en laine minérale, pour permettre la pénétration au travers des parties de fixation du voile non tissé d'un adhésif utilisé pour fixer une membrane étanche.
